# EUROPEAN PATENT APPLICATION

(11) **EP 3 484 109 A1**
(43) Date of publication of application: **15.05.2019**
(21) Application number: 17306555.8
(22) Date of filing: 09.11.2017
(51) Int. Cl.: H04L 12/721, H04L 12/715

(54) **METHOD FOR MANAGING SERVICES CHAINING AT A NETWORK EQUIPMENT, CORRESPONDING NETWORK EQUIPMENT**

(71) Applicant: THOMSON LICENSING, 92130 Issy les Moulineaux (FR)
(72) Inventor: ONNO, Stéphane, 35576 Cesson-Sevigne (FR); LEGALLAIS, Yvon, 35576 Cesson-Sevigne (FR); LE SCOUARNEC, Nicolas, 35576 Cesson-Sevigne (FR)
(74) Representative: Vidon Brevets & Stratégie

(57) **Abstract**

A network equipment configured to operate a plurality of network functions (111) and to receive data packets from at least one device (10) at an input classifier (112), comprises one output classifier (112, 113) configured to perform:
- receiving, after processing by one or several network functions (111) operated at the network equipment (100), a first data packet belonging to a data flow untracked yet by the output classifier (113), the first data packet comprising services chaining information and identification information of the untracked data flow;
- obtaining, from the services chaining information of the first data packet, a reverse services path to be applied to a further data packet received in response to the first data packet and belonging to the untracked data flow;
- storing the identification information of the untracked data flow along with the obtained reverse services path.

Network equipment (100)

## Description

### TECHNICAL FIELD

The present disclosure generally relates to the management of network functions and more particularly to the services chaining information supporting management of network functions.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Telecommunication network service providers currently provide one or several middlebox services or appliances, which are computer networking devices adapted to transform, inspect, filter, or manipulate data packets other than packet forwarding. Known examples of such middlebox services are firewalls (filtering unwanted or malicious traffic), virus scanning, deep packet inspection (DPI) service, Network Address Translators NAT (modifying packets source and destination addresses), intrusion detection and prevention (IDP) service, etc. These middlebox services can require high throughput and packet inspection capabilities. They can be transparent or nontransparent to the end users (so called subscribers or customers) and can be hosted in dedicated physical hardware or in virtual machines.

When data packets need to be successively processed by several middlebox services (or network functions) in a given order (i.e., a chain of services), the services chaining can be required. In addition, when several chains of services are possible, data packets need to be steered to the right middle box services of each selected chain of services.

To that end, it is known to implement the NSH (Network Service Header) protocol to establish services chaining (so-called network function chaining) wherein packets, irrespective of their destination, must be forwarded along their services path. In particular, an input classifier and an output classifier classify each customer packet coming from for respectively the forward and the reverse path, add a NSH Header and fills this header with relevant information later used by the forwarder to steer the traffic to network functions accordingly. NSH defines Service Function (SF) (e.g. Parental Control, IPS) and Service Forwarder Function (SFF) (e.g. Forwarder) and is mainly based on Services Path Information (SPI) and Service Index (SI) fields carried within the base header. A SPI identifies a particular services chain (i.e. an ordered series of functions to traverse). The SI identifies the location of a packet within a services path. As packets traverse a services path, the SI is decremented by the service function. Each unique combination of {SPI, SI} gives the forwarder enough information to forward the traffic provided that the forwarder is already configured with forwarding rules for all {SPI, SI} combinations that traverse it.

With such a services chaining implementation, input and output Classifiers are configured separately with rules associating packets to chains (i.e., set of function that must process the packet). The rules generally match a subset of fields of the headers (e.g., destination port for protocol TCP).

But, it disregards the fact that packets are not meant to be processed individually, but are generally flows of packets (e.g., all packets of a TCP connection, of an HTTP session or of an UDP "connection). Classifiers work at the packet level. It is then not possible to safely alter configuration (e.g., set of rules and chains) of a services chaining based system so that functions can process well identified flows. Indeed, after a reconfiguration of a classifier (e.g. input or output classifier), the packets of an existing connection may go through different network functions that miss information from previous packets to properly analyze the traffic (e.g., Deep Packets Inspection, transparent HTTP proxy).

The present disclosure has been devised with the foregoing in mind.

### SUMMARY

The disclosure concerns a method to be implemented at a network equipment configured to operate a plurality of network functions and to receive data packets from at least one device at an input classifier,
wherein said method comprises, at an output classifier of the network equipment:
- receiving, after processing by one or several network functions operated at the network equipment, a first data packet belonging to a data flow not tracked yet by the output classifier, said first data packet comprising services chaining information and identification information of the untracked data flow;
- obtaining, from the services chaining information of the first data packet, a reverse services path to be applied to a further data packet received in response to the first data packet and belonging to said untracked data flow;
- storing the identification information of the untracked data flow along with the obtained reverse services path.

In an embodiment of the present principles, services chaining information can comprise a forward services path and the reverse services path.

In an embodiment of the present principles, services chaining information can comprise a forward services path from which the reverse services path is derived.

In an embodiment of the present principles, the identification information of the untracked data flow along with the obtained reverse services path can be stored in a tracking table.

In an embodiment of the present principles, said method can further comprise adding the obtained reverse services path to a further data packet reaching the network equipment at the output classifier in response to the first data packet.

In an embodiment of the present principles, services chaining information can be added to the first data path by an input classifier of the network equipment.

In an embodiment of the present principles, the reverse services path can be added to the first data packet by a network function of the network equipment processing said first data packet.

In an embodiment of the present principles, the services chaining information can be removed from the first data packet when leaving the network equipment.

The present principles further concern a network equipment configured to operate a plurality of network functions and to receive data packets from at least one device at an input classifier. According to the present principles, the network equipment comprises one output classifier configured to perform:
- receiving, after processing by one or several network functions operated at the network equipment, a first data packet belonging to a data flow untracked yet by the output classifier, said first data packet comprising services chaining information and identification information of the untracked data flow;
- obtaining, from the services chaining information of the first data packet, a reverse services path to be applied to a further data packet received in response to the first data packet and belonging to said untracked data flow;
- storing the identification information of the untracked data flow along with the obtained reverse services path.

In an embodiment of the present principles, services chaining information can comprise a forward services path and the reverse services path.

In an embodiment of the present principles, wherein services chaining information can comprise a forward services path from which the reverse services path is derived.

In an embodiment of the present principles, the identification information of the untracked data flow along with the obtained reverse services path can be stored in a tracking table.

In an embodiment of the present principles, the output classifier can be further configured to add the obtained reverse services path to a further data packet reaching the network equipment at the output classifier in response to the first data packet.

In an embodiment of the present principles, services chaining information can be added to the first data path by the input classifier of the network equipment.

In an embodiment of the present principles, the reverse services path can be added to the first data packet by a network function of the network equipment processing said first data packet.

In an embodiment of the present principles, the services chaining information can be removed from the first data packet when leaving the network equipment.

The present principles also concern a network equipment configured to operate a plurality of network functions and to receive data packets from at least one device at an input classifier. Said network equipment comprises one output classifier comprising at least one memory and at least one processing circuitry configured to perform:
- receiving, after processing by one or several network functions operated at the network equipment, a first data packet belonging to a data flow untracked yet by the output classifier, said first data packet comprising services chaining information and identification information of the untracked data flow;
- obtaining, from the services chaining information of the first data packet, a reverse services path to be applied to a further data packet received in response to the first data packet and belonging to said untracked data flow;
- storing the identification information of the untracked data flow along with the obtained reverse services path.

Besides, the present principles are further directed to a non-transitory program storage device, readable by a computer, tangibly embodying a program of instructions executable by the computer to perform a method to be implemented at a network equipment configured to operate a plurality of network functions and to receive data packets from at least one device at an input classifier, wherein said method comprises:
- receiving, after processing by one or several network functions operated at the network equipment, a first data packet belonging to a data flow untracked yet by the output classifier, said first data packet comprising services chaining information and identification information of the untracked data flow;
- obtaining, from the services chaining information of the first data packet, a reverse services path to be applied to a further data packet received in response to the first data packet and belonging to said untracked data flow;
- storing the identification information of the untracked data flow along with the obtained reverse services path.

The present principles also concern a computer program product stored on a non-transitory computer readable medium and comprising program code instructions executable by a processor for implementing a method at a network equipment configured to operate a plurality of network functions and to receive data packets from at least one device at an input classifier, wherein said method comprises, at an output classifier of the network equipment:
- receiving, after processing by one or several network functions operated at the network equipment, a first data packet belonging to a data flow untracked yet by the output classifier, said first data packet comprising services chaining information and identification information of the untracked data flow;
- obtaining, from the services chaining information of the first data packet, a reverse services path to be applied to a further data packet received in response to the first data packet and belonging to said untracked data flow;
- storing the identification information of the untracked data flow along with the obtained reverse services path.

The method according to the disclosure may be implemented in software on a programmable device. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method aforementioned.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of a network environment adapted to implement some embodiments of the present principles;
- Figure 2 is a flow chart of an exemplary method for services chaining tracking in a network equipment, according to the present principles;
- Figure 3 shows an example of a hardware configuration of each device/host of network equipment of the Figure 1, according to the present principles.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes that may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

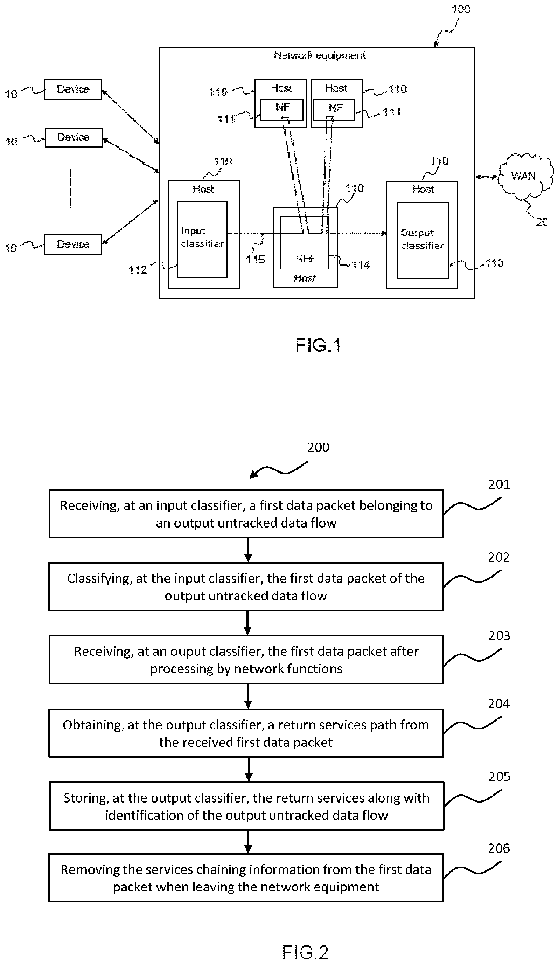

Figure 1 is a schematic diagram of an exemplary network infrastructure comprising a network equipment 100 (such as a customer premise equipment CPE) and several devices 10 (such as a switch, a portable media device, a mobile phone, a Set Top Box, a laptop, etc.) in communication with the network equipment 100 (e.g., via cable, optic fiber, xDSL, satellite, LTE, 3G technologies, etc.). It should be understood that further apparatuses (not shown) can be arranged between a device 10 and the network equipment 100.

As shown on figure 1, the network equipment 100 can comprise one or several physical hosts 110 (in the example of Figure 1, five hosts 110 are illustrated) belonging for instance to a datacenter. Each host 110 can run one or several network functions 111 (such as DHCP, DNS, Firewall, Parental Control, Intrusion Prevention System, Virus Scanning, Deep Packet Inspection, Network Address Translators, etc.). In other words, network functions providing by a network equipment 100 can be distributed over several hosts 110. In the following, a network function refers to an instance of said network functions.

The network equipment 100 can further provide, but not necessarily, connectivity to a Wide Area Network (WAN) 20 (such as Internet) to the network devices 10. In a variant or in a complement compliant with the present principles, the network equipment can be in communication with network devices 10 and other network equipment.

In the following, it is assumed that network configuration between devices 10 and network equipment 100 is already obtained.

In addition, as further shown in the example of Figure 1, the network equipment 100 can comprise the following network functions:
- an input classifier 112 configured to receive data packets from devices 10 (eventually after network processing such encapsulation and de-encapsulation operations) and to address data packets to the WAN 20 (via an output classifier 113) after processing by one or several networks functions 111, and conversely;
- the output classifier 113 configured to receive either data packets from devices 10 after processing, for example, by one or several network functions 111 and directed to WAN 20; or data packets from WAN 20 and directed to devices 10. Instead of coming from the WAN 20, data packets can be sent by another network equipment to reach the output classifier 113;
- one or several service function forwarders (SFF) 114 (only one is shown on the Figure 1) which can be configured to receive data packets from the input classifier 112 or output classifier 113, from a NF 111 after processing, from another SFF 114 (not shown on Figure 1). Each SFF 114 can be further configured to forward data packets, received either from the input classifier 112, or from a NF 111 or from another SFF 114, to a further NF 111 according to some embedded services chaining information. Finally, a SFF 114 can be further configured to end a services chain of network functions.

It should be understood that one or several network functions can be executed on a same host 110.

In the example of Figure 1, the network equipment is configured to support implementation of a plurality of chain of network functions 111 (also called services chain or services path).

In an embodiment according to the present principles, in order to support services chaining, the input classifier 112 (respectively the output classifier 113) can encapsulate data packets received from devices 10 (respectively from the WAN 20) by adding a services chaining information comprising a forward services path. It is assumed that the input classifier 112 and the output classifier 113 have been preliminary configured with forward services paths, for example by a services chaining controller (not shown in the Figures). They are aware of the forward services path to be associated with a data packet of a data flow coming from a given device 10 or from the WAN 20. To this end, lookup tables can be operated and updated at the input classifier 112 and at the output classifier 113, respectively. In such lookup tables, a MAC address (as source for traffic from device 10 or as destination for traffic from WAN) of a given device with a particular profile or 5-tuple, composed of source/destination IP address, protocol, source/destination port, identifying a particular data flow can for instance be associated with a services path.

It should be noted that the services chaining controller can add, update and delete classification entries of the lookup tables for each classifier (input or output classifiers).

As shown in Figure 2, the method 200 implemented at the network equipment 100 and compliant with the present principles can comprise the following steps.

In a step 201, the input classifier 112 can receive a first data packet belonging to a data flow (e.g. a TCP connection, an HTTP session, an UDP connection, etc.) which has not been tracked yet by the output classifier 113 (called hereinafter output untracked data flow), said first data packet reaching the network equipment at the input classifier side.

By output untracked data flow, it should be understood a data flow for which no reverse services path is currently associated with the identification information of the data flow at the output classifier 113. In particular, an output untracked data flow can be tracked at the input classifier 112 (i.e. the identification information of the data flow is stored in the input classifier along with a forward services path and a reverse path) but not tracked yet at the output classifier 113 (i.e. no reverse services path is associated with the identification information of the data flow at the output classifier).

A forward services path defines a succession of network functions that a data packet received at the input classifier 112 from a device 10 will have to pass through before leaving the network equipment 113.

A reverse services path defines the successive network functions that a data packet - received at the output classifier 113 from the WAN 20 in response to a previous data packet coming from a device 10 - will have to pass through before reaching the input classifier 112.

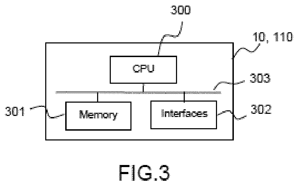

In a step 202, the input classifier 112 can classify the first data packet of the output untracked data flow by extracting identification information of said data flow from the first data packet. The identification information can be a 5-tuple comprising five different values: Source IP address, Source port number, Destination IP address, Destination port number and the protocol in use (e.g. TCP). The input classifier 112 can further add services chaining information comprising the forward services path and the reverse service path, for example, in an appropriate services chaining header (e.g. compliant with an implementation of the NSH protocol or with the implementation of a self-contained header explicitly listing identifiers of network functions to be applied to a data flow). The services chaining information can be later used by Service Function Forwarder SFF 114 in order to steer the data packet to the corresponding network functions 111. To that end, the input classifier 112 can parse its lookup table (e.g. stored in a memory 301 (see Figure3) of the input classifier 112) in order to reach an entry matching the identification information of the output untracked data flow, said lookup table having been preliminary filed by the services chaining controller.

In a variant compliant with the present principles, the reverse services path can be unavailable at the input classifier 112 (only the forward services path is stored in the lookup table). Services chaining information embedded within the services chaining header does not comprise the reverse services path, but only the forward services path. In such a case, the output classifier 113 can be configured to derive the reverse services path from the services chaining information (in particular from the forward services path). In a complement of the variant of the present principles, the reverse services path can be added by one or several network functions 111 specified in the forward services path carried in the services chaining header of the first data packet.

In a step 203, the first data packet embedding services chaining information can be delivered to a forwarder SFF 114 which forwards for processing the first data packet to a network function 111 identified in the forward services path specified in the service chaining header. Once processed by the network function 111, the first data packet is forwarded back to the forwarder 114. The processed first data packet can be further forwarded to either a next network function 111 indicated in the forward services path, or to another forwarder 114 or to the output classifier 113.

In a step 204, when the processed first data packet reaches the output classifier 113, the later can obtain - by parsing the services chaining header of the first data packet - the reverse services path. The reverse services can either be explicitly added in the services chaining header or can be derived from the embedded forward services path of the first data packet.

In particular, when the reverse services path is explicitly embedded in the services chaining header (hereinafter referenced as explicit case) after having been added either by the input classifier 112 or by one or several network functions 111 belonging to the corresponding forward services path, the output classifier 113 can directly retrieve the reverse services path from the services chaining header of the first data packet.

When the service chaining header does not comprise the reverse services path to be associated with the output untracked data flow of the first data packet (hereinafter referenced as implicit case), the output classifier 113 can derive the reverse services path from the forward services path provided that the reverse services path is the inverse of the forward services path and that the processing of the first data packet by the network functions specified in the forward services path has not removed or overridden services chaining information used to derive the reverse services path. As an illustrative but non-limiting example, when the forward services path is defined by the following network functions [NF2; NF3; NF1], the reverse services path can then be defined by [NF1; NF3; NF2].

In a step 205, once the reverse services path has been obtained for the output untracked data flow to which the first data packet belongs to, the output classifier 113 can store - in a tracking table - the obtained reverse services path along with the identification information of said data flow. The tracking table can, for instance, be stored in a storage means (e.g. a memory 301 as shown in Figure 3) of the output classifier 113. Naturally, the tracking table and the lookup table can be merged to form a single table.

Thus, when a further data packet - coming from the WAN 20 and directed to the device 10 which has sent the first data packet - reaches the output classifier 113 in response to said first data packet (i.e. said further data packet belongs to the same data flow as the first data packet), the output classifier 113 can further add the reverse services path in a services chaining header of that further data packet after parsing the tracking table (e.g. by implementing the NSH protocol as for the forward services path).

Besides, the services chaining information can be removed, in a step 206, from the first data packet, by the output classifier 113, when leaving the network equipment 100.

It should be understood that the input classifier can act as an output classifier for data flows established from a device arranged, for instance, in the WAN 20, and conversely.

Thanks to the present principles, the existing connections are not disrupted by services chaining reconfiguration operated by a services chaining controller at the input and output classifiers (in particular, when such reconfiguration are performed asynchronously). As a consequence, the need for synchronization of configuration updates between input classifier and output classifier can be useless. Packets of established data flows can go through the existing services paths, even when an update has been delivered.

Besides, the present principles can avoid data flow disruption due to the implementation of round-robin process, since allocation of network function instances according to a round robin process at the input classifier and at the output classifier can lead to different set of instances of network functions for the forward services path and the reverse services path.

Since flow processing (i.e. the set of functions to be applied to the packets of a given data flow) is decided only at one classifier (and piggybacked to the other), there are less risks of inconsistent configuration due to configuration error, packet loss/network failure, or lousy synchronization between input classifier, output classifier and services chaining controller.

As shown in Figure 3 depicting one example of a hardware configuration, each of the respective devices 10 and hosts 110 of the network equipment 100 can comprise a Central Processing Unit (CPU) 300 (comprising one or several processors), a memory 301 and one or several interfaces 302 connected together via a bus 303. The CPU 300 is configured for processing various data and for controlling various function and components of each of the respective device 10 and hosts 110. The memory 01 may represent both a volatile memory such as RAM, and a non-transitory memory such as a ROM, a hard drive or a flash memory, for processing and storing different files and information as necessary, including computer program products and software. Some of the above-mentioned network functions and/or applications shown in Figure 1 can be implemented by computer-readable programs stored in the memory 301 of hosts 110. The interfaces 302 are used to communicate between the respective devices 10 and hosts 110 through wired or wireless connection(s). Interfaces 302 can further comprise user input and/or output elements (e.g., a touch panel, a display screen, a keyboard, a remote control, etc.)

In the Figures, it is to be appreciated that the illustrated blocks or modules can correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. A method to be implemented at a network equipment (100) configured to operate a plurality of network functions (111) and to receive data packets from at least one device (10) at an input classifier (112),
wherein said method comprises, at an output classifier (113) of the network equipment (100):
- receiving (203), after processing by one or several network functions (111) operated at the network equipment (100), a first data packet belonging to a data flow untracked yet by the output classifier (113), said first data packet comprising services chaining information and identification information of the untracked data flow;
- obtaining (204), from the services chaining information of the first data packet, a reverse services path to be applied to a further data packet received in response to the first data packet and belonging to said untracked data flow;
- storing (205) the identification information of the untracked data flow along with the obtained reverse services path.

2. The method according to claim 1, wherein services chaining information comprises a forward services path and the reverse services path.

3. The method according to claim 1 or 2, wherein services chaining information comprises a forward services path from which the reverse services path is derived.

4. The method according to claims 1 to 3, wherein the identification information of the untracked data flow along with the obtained reverse services path are stored in a tracking table.

5. The method according to claims 1 to 4, comprising adding the obtained reverse services path to a further data packet reaching the network equipment (100) at the output classifier (113) in response to the first data packet.

6. The method according to claims 1 to 5, wherein services chaining information is added to the first data path by an input classifier of the network equipment.

7. The method according to claims 1 to 6, wherein the reverse services path is added to the first data packet by a network function (111) of the network equipment (100) processing said first data packet.

8. A network equipment configured to operate a plurality of network functions (111) and to receive data packets from at least one device (10) at an input classifier (112),
wherein the network equipment (100) comprises one output classifier (112, 113) configured to perform:
- receiving (203), after processing by one or several network functions (111) operated at the network equipment (100), a first data packet belonging to a data flow untracked yet by the output classifier (113), said first data packet comprising services chaining information and identification information of the untracked data flow;
- obtaining (204), from the services chaining information of the first data packet, a reverse services path to be applied to a further data packet received in response to the first data packet and belonging to said untracked data flow;
- storing (205) the identification information of the untracked data flow along with the obtained reverse services path.

9. The network equipment according to claim 8, wherein services chaining information comprises a forward services path and the reverse services path.

10. The network equipment according to claim 8 or 9, wherein services chaining information comprises a forward services path from which the reverse services path is derived.

11. The network equipment according to claims 8 to 10, wherein the identification information of the untracked data flow along with the obtained reverse services path are stored in a tracking table.

12. The network equipment according to claims 8 to 11, wherein the output classifier (113) is further configured to add the obtained reverse services path to a further data packet reaching the network equipment at the output classifier (113) in response to the first data packet.

13. The network equipment according to claims 8 to 12, wherein services chaining information is added to the first data path by the input classifier of the network equipment (100).

14. The network equipment according to claims 8 to 13, wherein the reverse services path is added to the first data packet by a network function (111) of the network equipment (100) processing said first data packet.

15. A computer program product stored on a non-transitory computer readable medium and comprising program code instructions executable by a processor for implementing a method at a network equipment configured to operate a plurality of network functions and to receive data packets from at least one device at an input classifier, wherein said method comprises, at an output classifier of the network equipment:
- receiving (203), after processing by one or several network functions (111) operated at the network equipment (100), a first data packet belonging to a data flow untracked yet by the output classifier (113), said first data packet comprising services chaining information and identification information of the untracked data flow;
- obtaining (204), from the services chaining information of the first data packet, a reverse services path to be applied to a further data packet received in response to the first data packet and belonging to said untracked data flow;
- storing (205) the identification information of the untracked data flow along with the obtained reverse services path.
